# EUROPEAN PATENT APPLICATION

(11) **EP 1 777 981 A1**
(43) Date of publication of application: **25.04.2007**
(21) Application number: 06121293.2
(22) Date of filing: 26.09.2006
(51) Int. Cl.: H04Q 7/38, G01C 21/26

(54) **Method and apparatus for providing and processing location information**

(30) Priority: 18.10.2005 KR 20050098074
(71) Applicant: Samsung Electronics Co., Ltd., Suwon-si, Gyeonggi-Do (KR)
(72) Inventor: Park, Sung-il, Gyeonggi-do (KR)
(74) Representative: Clark, Charles Robert

(57) **Abstract**

A method and apparatus for providing location information and a method and apparatus (100) for processing the location information are provided. The method of providing location information, includes: obtaining a node identifier or a link identifier relating to a target location (810); and providing location information on the target location using at least one of the node identifier, the link identifier, and a relative location of the target location based on a node and/or a link (830). Therefore, the location information can be provided with a small amount of data and can be updated in real-time.

## Description

The present invention relates to providing location information and processing the location information.

Traffic information and its related service information rely on location information in order to operate. Both traffic and service information can be provided to digital broadcasting receivers. Conventionally, location information includes a large amount of data and requires large data transmission bandwidths. To address this problem, a node link system has been introduced to identify locations of roads, thereby reducing the complexity of a system to improve the transmission of location information concerning roads and intersections.

However, such a system cannot provide information on locations beside or adjacent to roads, or other specific locations. That is, conventional methods of providing location information cannot identify information with regard to every location. Also, using conventional methods, it is very difficult or impossible to update information with regards to new buildings or facilities in real-time, as buildings are demolished, erected or undergo a change or use, for instance.

The present invention aims to address these problems.

An aspect of the present invention provides a method and apparatus for providing and processing location information, having a relatively small amount of data, in real-time.

According to an aspect of the present invention, there is provided a method of providing location information, comprising: obtaining one of a node identifier and a link identifier relating to a target location; and providing location information regarding the target location using at least one of the node identifier, the link identifier, and a relative location of the target location based on a node and/or a link.

The location information regarding the target location may be provided using the link identifier and the relative location of the target location from a start of the link or an end of the link.

The location information regarding the target location may be provided using the link identifier, a first angle between a line connecting the start of the link and the target location and a line connecting the start of the link and the end of the link, and a second angle between a line connecting the end of the link and the target location and the line connecting the start of the link and the end of the link.

The location information regarding the target location may be provided using the link identifier, the node identifier, and the relative location of the target location in a straight line between the start of the link or the end of the link and the node.

The relative location of the target location may be indicated as a percentage of a distance from the start of the link or the end of the link to the target location, or a distance from the node to the target location along the straight line.
The location information regarding the target location may be provided using an identifier of a first node, an identifier of a second node, and the relative location of the target location in a straight line connecting the first node and the second node.

The relative location of the target location may be indicated as a percentage of a distance from the first node to the target location, or a distance from the second node to the target location along the straight line.

According to another aspect of the present invention, there is provided a method of processing location information, comprising: receiving target location information comprising at least one of an identifier of a node relating to a target location, an identifier of a link relating to the target location, and a relative location of the target location based on the node and/or the link; searching for information on the node or the link based on the identifiers of the node and link included in the target location information; and obtaining the target location using the information on the node or the link and the relative location of the target location.

According to another aspect of the present invention, there is provided an apparatus for providing location information, comprising: a node link storing unit storing node information relating to a place on a map and link information connecting places; and a processing unit searching for an identifier of a node or a link relating to a target location from the node link storing unit and providing target location information using at least one of the searched node identifier, the searched link identifier, and a relative location of the target location based on the node and/ or the link.

The apparatus may further comprise an outputting unit generating a message comprising the target location information and outputting the message.

The apparatus may further comprise a request receiving unit receiving a request for the target location information, wherein the processing unit provides the target location information if the request receiving unit receives the request for the target location information.

According to another aspect of the present invention, there is provided an apparatus for processing location information, comprising: an information receiving unit receiving target location information comprising at least one of an identifier of a node relating to a target location, an identifier of a link relating to the target location, and a relative location of the target location based on the node and/or the link; a node link storing unit storing node information relating to a place on a map and link information connecting places; and a processing unit searching for the node information or the link information from the node link storing unit based on the identifier of the node or the identifier on the link included in the target location information and obtaining the target location using the node information or the link information and the relative location of the target location.

Embodiments of the present invention are now described by way of example with reference to the accompanying drawings, in which:
Figure 1 is a schematic block diagram of an apparatus for providing location information according to an exemplary embodiment of the present invention;
Figure 2 is a flowchart of an operation of the exemplary apparatus for providing location information that is illustrated in Figure 1;
Figures 3A and 3B illustrate examples of providing location information using a link according to an exemplary embodiment of the present invention;
Figure 3C is a block diagram of a location information profile using the exemplary link of Figure 3A;
Figures 4A and 4B illustrate examples of providing location information using a link and angles according to an exemplary embodiment of the present invention;
Figure 4C is a block diagram of a location information profile using the exemplary link and angles of Figure 4A;
Figures 5A and 5B illustrate examples of providing location information using a link and node according to an exemplary embodiment of the present invention;
Figure 5C is a block diagram of a location information profile using the exemplary link and node of Figure 5A;
Figures 6A and 6B illustrate examples of providing location information using first and second nodes according to an exemplary embodiment of the present invention;
Figure 6C is a block diagram of a location information profile using the exemplary first and second nodes of Figure 6A;
Figure 7 is a block diagram of an apparatus for providing location information according to another exemplary embodiment of the present invention;
Figure 8 is a flowchart of an operation of the exemplary apparatus for providing the location information illustrated in Figure 7;
Figure 9 is a block diagram of an apparatus for processing location information according to an exemplary embodiment of the present invention; and
Figure 10 is a flowchart of an operation of the exemplary apparatus for processing the location information illustrated in Figure 9.

The present invention will now be described more fully by way of reference to exemplary embodiments of the invention and with reference to the accompanying drawings.

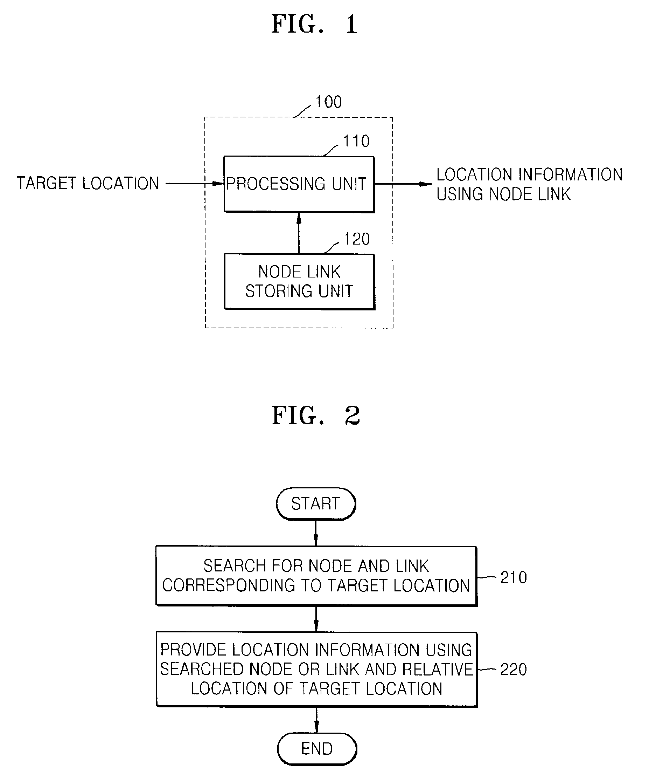

Figure 1 is a schematic block diagram of an apparatus 100 for providing location information according to an exemplary embodiment of the present invention. Referring to Figure 1, the apparatus 100 for providing location information comprises a processing unit 110 and a node link storing unit 120. The node link storing unit 120 stores information on nodes and links. Nodes correspond to places or locations on a map. Node information is data which identifies nodes such as roads and intersections, and node information is sometimes referred to as a node link system. A service provider is arranged to provide identifications of nodes to users without map coordinates so that users can be informed of locations. The node information may include, for example, a node identifier, a node name, longitude information, latitude information, an area (a zip code) of a node, an existence of a main intersection, and so on. Links indicate connection lines linking places on a map and may comprise, for example, roads, railway lines, pathways or the like. Link information may include, for example, an area code, a start node, an end node, a link identifier, a kind or classification of roads, a link name, a length of a road, an administrative area code, and so on. Consistent with various aspects of the present invention, the node and link information can be used as previously provided information, or can be newly generated.

The processing unit 110 receives a target or target location for which location information is provided, and searches for node and link information relating to the target location in the node link storing unit 120. For instance, the processing unit 110 searches for nodes and links located around the target location. The processing unit 110 also generates location information regarding the target location using an identifier of the searched node or link and a relative location of the target from the searched node or link, and provides the generated location information to users. The target can be, for example, a place of interest or a desired destination point of a journey input, into the system by a user.

Figure 2 is a flowchart of an operation of the apparatus 100 for providing location information illustrated in Figure 1. Referring to Figure 2, the processing unit 110 searches for a node and link corresponding to a target location in the node link storing unit 120 (Operation 210), and provides the location information using the searched node or link and a relative location of the target location (Operation 220).

The apparatus 100 for providing location information can easily provide the location information using the previously provided node or link and the relative location of the target location.

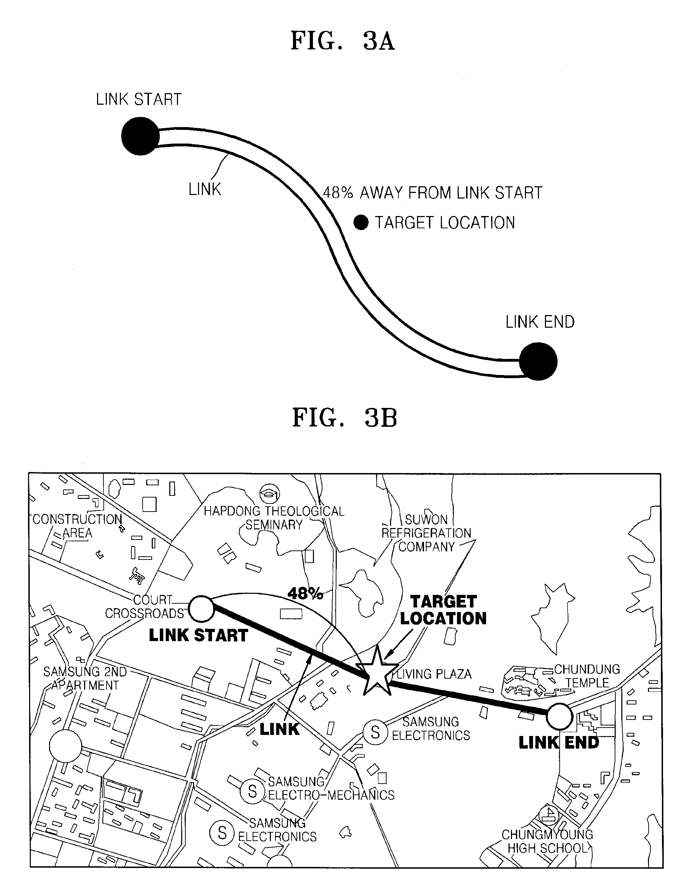

Examples of providing location information using node information or a link and a relative location of the target location will be described below with reference to Figures 3A, 3B, 3C, 4A, 4B, 4C, 5A, 5B, 5C, 6A, 6B and 6C.

Figures 3A and 3B illustrate examples of providing location information using a link according to an exemplary embodiment of the present invention. Referring to Figure 3A, the location information is provided using the link and a relative location of the target location from a start of the link, or an end of the link, to a target location. As shown in Figure 3A, the target location is 48% away from the start of the link. In other words, the target is located at a position which is 48% of the total distance along, or total length of, a link, starting from the start-point of the link.

Referring to Figure 3B, a target location "Living Plaza" is 48% away from a start of a link "Court Crossroads," and the end of the link is "Chundung Temple."

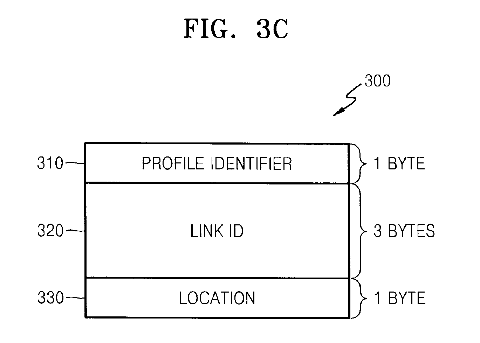

Figure 3C is a block diagram of a location information profile 300 using the exemplary link of Figure 3A. Referring to Figure 3C, the location information profile 300 includes a profile identifier 310, a link identifier 320, and a location 330. The profile identifier 310 identifies that the location information profile 300 using the link has, for example, a value of 0x01, and is represented by 1 byte.

The link identifier 320 identifies the link and is represented by 3 bytes.

The location 330 indicates a relative location of the target location from a start or end of the link to a target location, and, for example, can be expressed as a percentage of a distance from the start or the end of the link to the target location, and is represented by 1 byte.

Thus, the location information profile 300 using the link can be represented by 5 bytes.

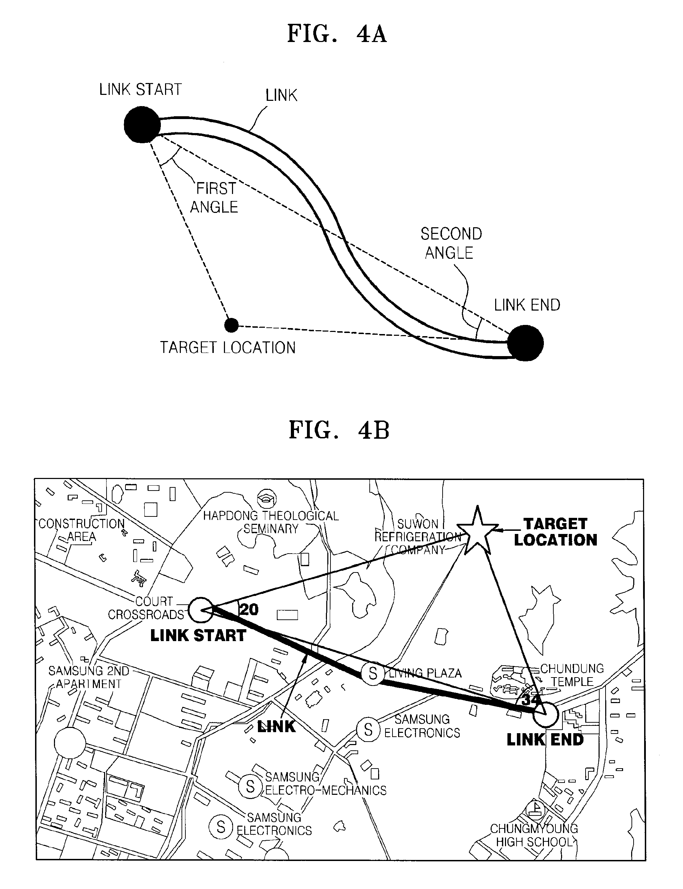

Figures 4A and 4B illustrate examples of providing location information using a link and angles according to an exemplary embodiment of the present invention. Referring to Figure 4A, the location information is provided using a link, a first angle between a line connecting a start and end of the link and a line connecting the start of the link and a target location, and a second angle between the line connecting the start and end of the link and a line connecting the end of the link and the target location. However, such a method of determining an angle between the link and the target location is not limited to the exemplary method shown in Figure 4A.

Referring to Figure 4B, a first angle between a line connecting a target location "Suwon Refrigeration Company" and a link start "Court Crossroads" and a line connecting the link start "Court Crossroads" and a link end "Chundung Temple" is 20 degrees, and a second angle between a line connecting the target location "Suwon Refrigeration" and the link end "Chundung Temple" and the line connecting the link start "Court Crossroads" and the link end "Chundung Temple" is 34 degrees.

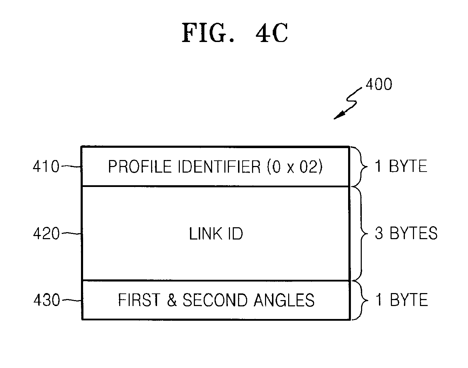

Figure 4C is a block diagram of a location information profile 400 using the exemplary link and angles of Figure 4A. Referring to Figure 4C, the location information profile 400 includes a profile identifier 410, a link identifier 420, and first and second angles 430.

The profile identifier 410 identifies that the location information profile 400 using the link and angles, has, for example, a value of 0x02, and is represented by 1 byte.

The link identifier 420 identifies the link and is represented by 3 bytes.

The first and second angles 430 indicate a first angle between a line connecting the link start and the target location and a line connecting the link start and the link end, and a second angle between a line connecting the link end and the target location and the line connecting the link start and the link end, respectively, and can be represented by 1 byte.

Thus, the location information profile 400 using the link and angles can be represented by 5 bytes.

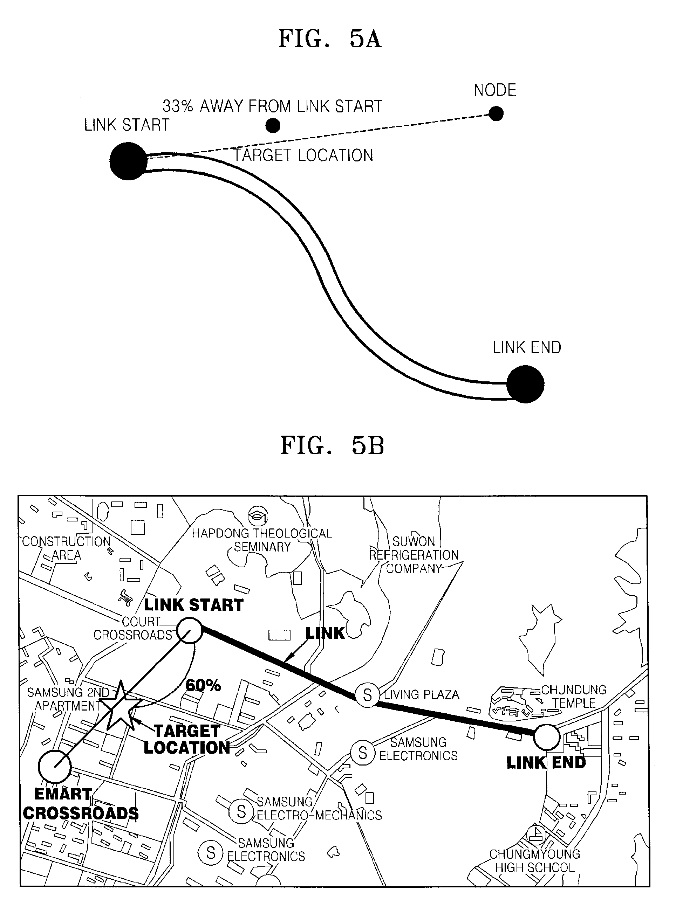

Figures 5A and 5B illustrate examples of providing location information using a link and node according to an exemplary embodiment of the present invention. Referring to Figure 5A, the location information is provided using the link, the node, and a relative location of a target location which is located along a straight line between a start or end of the link and the node. As shown in Figure 5A, the target location is 33% away from the start of the link in the straight line between the start of the link and the node. The relative location of the target location from the node can be expressed, for example, as a percentage of a distance from the start of the link to the target location.

Referring to Figure 5B, a target location "Samsung 2^{nd} Apartment" is 60% away from a link start "Court Crossroads" along a straight line between the link start "Court Crossroads" and a node "Emart Crossroads." As shown in Figure 5B, a link end is "Chundung Temple."

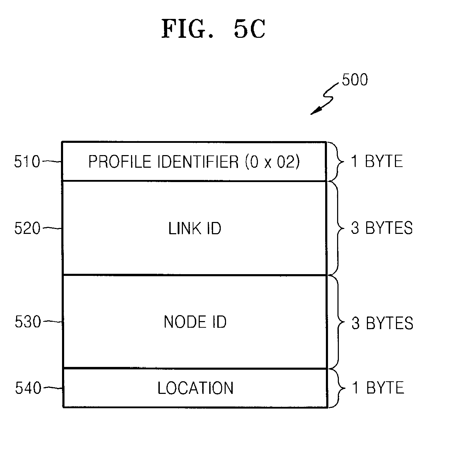

Figure 5C is a block diagram of a location information profile 500 using the exemplary link and node of Figure 5A. Referring to Figure 5C, the location information profile 500 includes a profile identifier 510, a link identifier 520, a node identifier 530, and a location 540.

The profile identifier 510 identifies that the location information profile 500 using the link and node, has, for example, a value of 0x03, and is represented by 1 byte.

The link identifier 520 identifies the link and is represented by 3 bytes.

The node identifier 530 identifies the node and is represented by 3 bytes.

The location 540 indicates a relative location of a target location along a straight line between a start or end of the link and the node. The location 540, for example, can be expressed as a percentage of a distance from the start or the end of the link to the target location, and is represented by 1 byte.

Thus, the location information profile 500 using the link and node can be represented by 8 bytes.

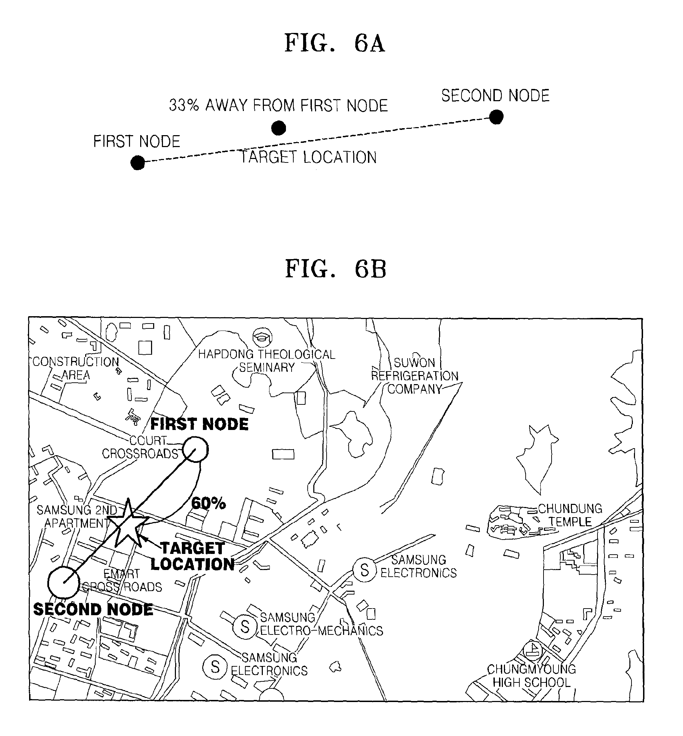

Figures 6A and 6B illustrate examples of providing location information using first and second nodes according to an exemplary embodiment of the present invention. Referring to Figure 6A, the location information is provided using the first and second nodes, and a relative location of a target location along a straight line between the first and second nodes. The target location is 33% of a distance from the first node to the second node away from the first node.

Referring to Figure 6B, a target location "Samsung 2^{nd} Apartment" is located at a distance which is 60% of a distance from the first node to the second node away from a first node "Court Crossroads" along a straight line between the first node "Court Crossroads" and a second node "Emart Crossroads." In other words, the target location is located 60% (or 0.6) of the total length of the straight line connecting the first and second nodes, starting from the first node.

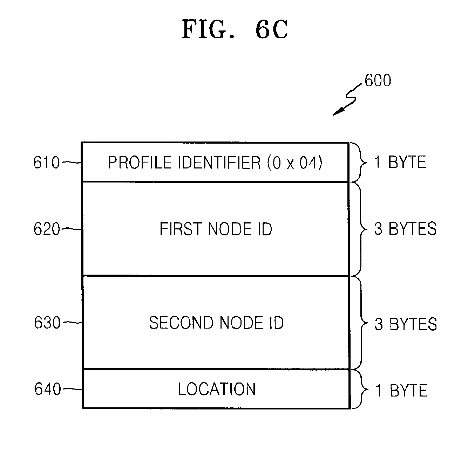

Figure 6C is a block diagram of a location information profile 600 using the exemplary first and second nodes of Figure 6A. Referring to Figure 6C, the location information profile 600 includes a profile identifier 610, a first node identifier 620, a second node identifier 630, and a location 640.

The profile identifier 610 identifies that the location information profile 600 using the first and second nodes, has, for example, a value of 0x04, and is represented by 1 byte.

The first node 620 identifies the first node and is represented by 3 bytes.

The second node identifier 630 identifies the second node and is represented by 3 bytes.

The location 640 indicates a relative location of a target location along a straight line between the first and second nodes, and, for example, can be expressed as a percentage, and is represented by 1 byte.

Thus, the location information profile 600 using the first and second nodes can be represented by 8 bytes.

Referring to Figures 3A, 3B, 3C, 4A, 4B, 4C, 5A, 5B, 5C, 6A, 6B and 6C, the location information profile 300 using a link, the location information profile 400 using a link and angles, the location information profile 500 using a node and a link, and the location information profile 600 using two nodes can be represented by 5, 5, 8, and 8 bytes, respectively. However, according to TPEG-Noc Container which is a European traffic information standard, the location information needs at least 15 bytes including Language Code (1 byte), ID+length+location Type (3 bytes), WGS84ID+length (3 bytes), and Longitude-Latitude (8 bytes). Therefore, the methods of providing location information according to exemplary embodiments of the present invention do not require as many bytes as conventional methods of providing location information.

Four methods of providing location information using nodes, links, and relative locations according to exemplary embodiments of the present invention have been provided above but the present invention is not limited thereto. The location information can be provided using at least one of nodes, links, and relative locations consistent with the present invention.

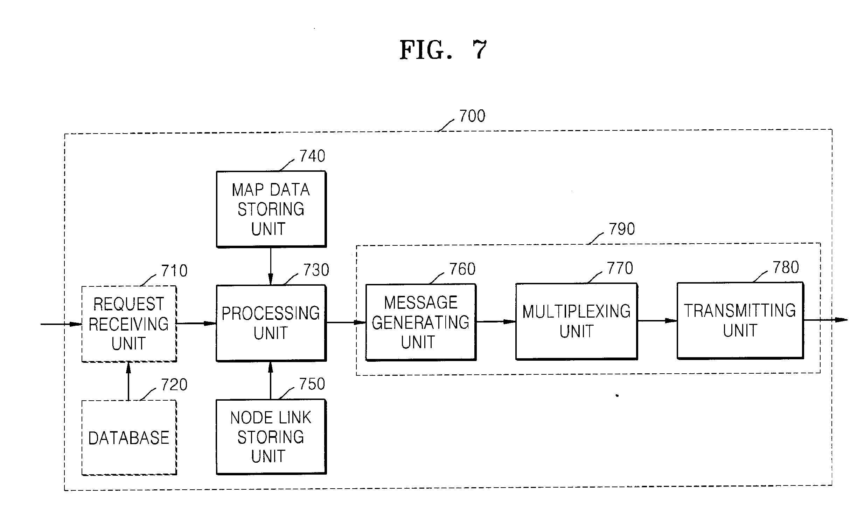

Figure 7 is a block diagram of an apparatus 700 for providing location information according to another exemplary embodiment of the present invention. Referring to Figure 7, the apparatus 700 for providing location information comprises a request receiving unit 710, a database 720, a processing unit 730, a map data storing unit 740, a node link storing unit 750, a message generating unit 760, a multiplexing unit 770, and a transmitting unit 780.

The map data storing unit 740 stores map data. Such map data may include, for example, information on the latitude and longitude of each of a plurality of places on a map, nodes, and links.

The node link storing unit 750 stores information regarding nodes and links, such as those illustrated in Figure 3.

The processing unit 730 receives a target location providing location information, searches for node and link information relating to the target location stored in the node link storing unit 750, generates the location information regarding the target location using an identifier of the searched node or link and a relative location of the target location from the searched node and link, and provides the generated location information to the message generating unit 760. Since the location information regarding the target location is stored in the map data storing unit 740, when the processing unit 730 receives a request for the target location, the processing unit 730 searches for the location information regarding the target location in the map data storing unit 740 (as opposed to processing the location information on the target location).

The message generating unit 760 generates a message in the shape of a profile as illustrated in Figures 3C, 4C, 5C, and 6C based on the received location information.

The multiplexing unit 770 multiplexes the generated message data with other data and transmits the data to the transmitting unit 780.

The transmitting unit 780 transmits the data received from the multiplexing unit 770. The message generating unit 760, the multiplexing unit 770, and the transmitting unit 780 together constitute an outputting unit 790.

A location information provider, such as a broadcasting station, provides unidirectional location information using the processing unit 730, the map data storing unit 740, the node link storing unit 750, the message generating unit 760, the multiplexing unit 770, and the transmitting unit 780.

The location information can be provided, for instance, after a request for the location information is received via a terminal. The request receiving unit 710 and the database 720 are additionally used to receive the request for the location information from the terminal.

The request receiving unit 710 receives the request for the location information from a user terminal over a back-channel of digital broadcasting or other channels. Examples of such a back-channel include, but are not limited to, code division multiple access (CDMA), wireless broadband (WIBRO), worldwide interoperability for microwave access (WIMAX), and so on.

The database 720 includes information provided by an information provider, for example, data such as menu information provided by good restaurants. For example, when the request receiving unit 710 receives a request for menu information provided by a good restaurant located at a distance from the user terminal, the request receiving unit 710 searches for the menu information in the database 720, and if it is determined that the database 720 includes the requested menu information, transmits a signal to the processing unit 730 to provide location information on the good restaurant. The constitution of the menu information is beyond the scope of the present invention and a description thereof is omitted.

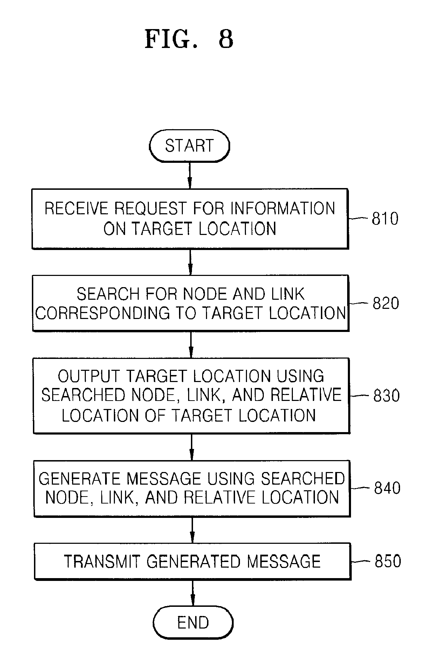

Figure 8 is a flowchart of an operation of the exemplary apparatus 700 for providing the location information illustrated in Figure 7. Referring to Figure 8, the processing unit 730 receives a request for information on a target location (Operation 810).

The processing unit 730 searches for a node and link corresponding to the target location from the node link storing unit 750 (Operation 820).

The processing unit 730 outputs the target location using the searched node, link, and a relative location of the target location (Operation 830).

The message generating unit 760 generates a message using the searched node, link, and the relative location of target location (Operation 840). The multiplexing unit 770 and the transmitting unit 780 transmit the generated message (Operation 850).

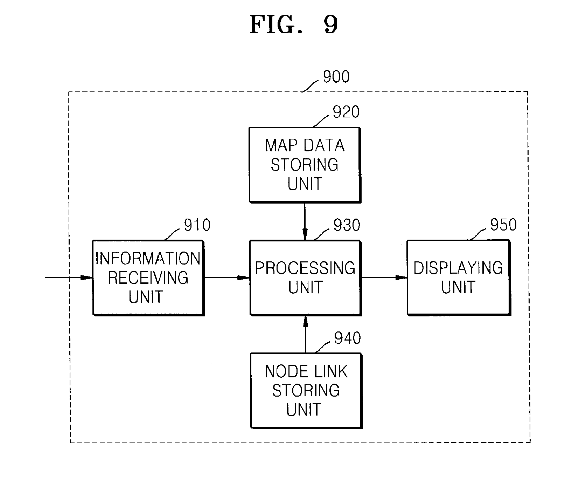

Figure 9 is a block diagram of an apparatus 900 for processing location information according to an exemplary embodiment of the present invention. Referring to Figure 9, the apparatus 900 for processing location information comprises an information receiving unit 910, a map data storing unit 920, a processing unit 930, a node link storing unit 940, and a displaying unit 950.

The information receiving unit 910 receives location information including a node identifier or a link identifier and a relative location of a node and link from outside of the apparatus 900.

The map data storing unit 920 stores map data. The map data includes, for example, information regarding a latitude and a longitude of each of a plurality of places on a map in the form of a bitmap.

The node link storing unit 940 stores node and link information, such as that illustrated in Figure 3.

The processing unit 930 extracts the node identifier and the link identifier from the location information, searches for the node and link identifiers from the node link storing unit 940, and retrieves node information and link information corresponding to the node identifier and the link identifier, respectively. The processing unit 930 searches for latitude and longitude information of the node or link from the retrieved node information and the retrieved link information, and calculates a latitude and longitude of a target location using the latitude and longitude information and the relative location of the node and link.

The processing unit 930 searches for the target location from within the map data storing unit 920 using the calculated latitude and longitude of the target location and transmits the target location to the displaying unit 950.

The displaying unit 950 displays location information provided by the processing unit 930.

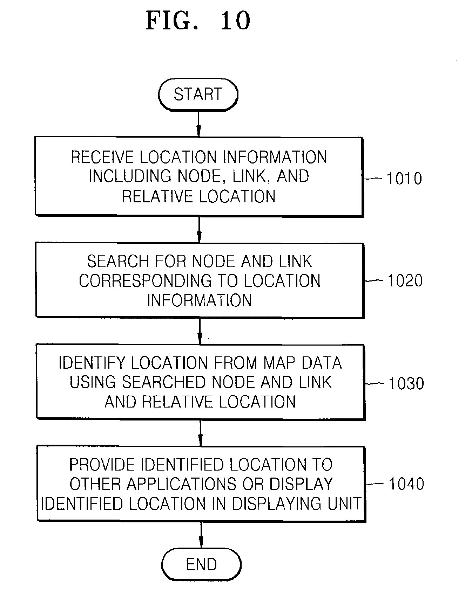

Figure 10 is a flowchart of an operation of the exemplary apparatus 900 for processing the location information illustrated in Figure 9. Referring to Figure 10, the information receiving unit 910 receives location information including a node, link, and relative location (Operation 1010).

The processing unit 930 searches for the node and link corresponding to the location information received by the information receiving unit 910 from within the node link storing unit 940 (Operation 1020).

The processing unit 930 identifies a location from map data using the searched node and link and the relative location (Operation 1030). The processing unit 930 provides the identified location to other applications or provides the identified location to the displaying unit 950, and the displaying unit 950 displays the identified location (Operation 1040).

The present invention can also be embodied, for instance, as computer readable code on a computer readable recording medium. Such a computer readable recording medium is any data storage device that can store data which can be thereafter read by a computer system. Examples of such computer readable recording media include, but are not limited to, read-only memory (ROM), randomaccess memory (RAM), CD-ROMs, magnetic tapes, floppy disks, optical data storage devices, and carrier waves. Such a computer readable recording medium can also be distributed network coupled computer systems so that the computer readable code is stored and executed in a distributed fashion. Also, functional programs, codes and code segments for accomplishing the present invention can be construed by a programmer skilled in the art to which the present invention pertains.

The method of providing location information according to an exemplary embodiment of the present invention can, among other things, reduce an amount of data and can update locations in real-time.

In particular, program related location information can be viewed when a user watches a video digital broadcasting program. Since conventional electronic program guide (EPG) information does not include the program related location information, the video digital broadcasting program is provided only via a terminal. However, if EPG includes the program related location information, a user can be provided with the program location information. Also, the user can access a place relating to the program using location and traffic information.

A traffic information service can attempt to provide various services relating to road traffic. For example, a traffic information service may provide information on current traffic conditions in certain locations, and information concerning the locations of parking lots, restaurants, movie theaters, or other places of interest that are located near roads or near the route intended by a user. However, using conventional coordinate systems, a large amount of data is needed in order to provide all the information concerning a location to a system. A node link system can transmit information using a small amount of data and, in addition, the system can provide information concerning other features in a location, including roads, crossroads, buildings, and so on. Therefore, according to exemplary embodiments of the present invention, locations of roads and nodes (crossroads, etc.) and other places near roads and nodes can be provided to a user using a relatively small amount of data. As a result, embodiments of the present invention can transmit data using less bandwidth. Alternatively, more data can be transmitted using embodiments of the present invention over the same or similar bandwidths needed by conventional systems.

While the present invention has been particularly shown and described with reference to exemplary embodiments thereof, it will be understood by those skilled in the art that various changes in form and details may be made therein without departing from the scope of the invention as defined by the appended claims.

## Claims

1. A method of providing location information, comprising:
obtaining at least one of a node identifier and a link identifier relating to a target; and
providing location information of the target using at least one of the node identifier, the link identifier, and a relative location of the target based on at least one of a node and a link.

2. The method of claim 1, wherein the location information regarding the target is provided using the link identifier and the relative location of the target from a start of the link or from an end of the link.

3. The method of claim 1, wherein the location information regarding the target is provided using the link identifier,
a first angle between a first line connecting a start of the link and the target and a second line connecting a start of the link and an end of the link, and
a second angle between a third line connecting the end of the link and the target and the second line connecting the start of the link and the end of the link.

4. The method of claim 1, wherein the location information regarding the target is provided using the link identifier, the node identifier, and the relative location of the target located along a straight line between a start or end of the link and the node.

5. The method of claim 4, wherein the location of the target is indicated as a percentage of the length of the straight line starting from the start or end of the link, or is indicated as a distance from the node to the target along the straight line.

6. The method of claim 1, wherein the location information regarding the target is provided using
a first node identifier,
a second node identifier, and
the relative location of the target located along a straight line connecting the first and second nodes.

7. The method of claim 6, wherein the location of the target is indicated as
a percentage of the length of the straight line from the first node, or
a distance from the second node to the target along the straight line.

8. A method of processing location information, comprising:
receiving target information comprising:
at least one of a node identifier identifying a node relating to a target, and a link identifier identifying a link relating to the target, and
a relative location of the target based on at least one of the node and the link;
searching for information regarding at least one of the node and the link based on at least one of the node identifier and the link identifier included in the received target information; and
obtaining the target using the relative location of the target and the information regarding at least one of the node and the link.

9. The method of claim 8, wherein the target information comprises:
the link identifier ; and
the relative location of the target from a start of the link or from an end of the link.

10. The method of claim 8, wherein the target information comprises:
the link identifier;
a first angle between a first line connecting a start of the link and the target and a second line connecting the start of the link and an end of the link; and
a second angle between a third line connecting the end of the link and the target and the second line.

11. The method of claim 8, wherein the target information comprises:
the link identifier;
the node identifier; and
the relative location of the target located along a straight line connecting a start or an end of the link and the node.

12. The method of claim 11, wherein the relative location of the target is indicated as a percentage of the length of the straight line from the start of the link or from the end of the link, or
a distance from the node to the target location along the straight line.

13. The method of claim 8, wherein the location information regarding the target is provided using a node identifier identifying a first node, a node identifier identifying a second node, and the relative location of the target located along a straight line connecting the first and second nodes.

14. The method of claim 13, wherein the relative location of the target is indicated as a percentage of the length of the straight line starting from the first or second node, or
a distance from the second node to the target location along the straight line.

15. An apparatus for providing location information, comprising:
means for storing node information relating to a place on a map and link information connecting places on the map; and
means for searching the storing means to obtain at least one of a node identifier identifying a node relating to a target and a link identifier identifying a link relating to a target, and for providing target information using at least one of a searched node identifier, a searched link identifier, and a relative location of the target based on at least one of the node and the link.

16. The apparatus of claim 15, wherein the searching means is arranged to provide the target information using the link identifier, and the relative location of the target from a start or an end of the link.

17. The apparatus of claim 15, wherein the searching means is arranged to provide the target information using the link identifier, a first angle between a first line connecting a start of the link to the target and a second line connecting the start of the link to an end of the link, and a second angle between a third line connecting the end of the link and the target and the second line.

18. The apparatus of claim 15, wherein the searching means is arranged to provide the target information using the link identifier, the node identifier, and the relative location of the target located along a straight line connecting a start or an end of the link and the node.

19. The apparatus of claim 18, wherein the relative location of the target is indicated as:
a percentage of the length of the straight line from the start of the link or the end of the link, or
a distance from the node to the target along the straight line.

20. The apparatus of claim 15, wherein the searching means is arranged to provide the target information using a node identifier of a first node, a node identifier of a second node, and the relative location of the target located along a straight line connecting the first and the second nodes.

21. The apparatus of claim 20, wherein the relative location of the target is indicated as a percentage of the length of the straight line from the first node, or a distance from the second node to the target along the straight line.

22. The apparatus of claim 15, further comprising means for generating a message comprising the target information and means for outputting the message.

23. The apparatus of claim 15, further comprising a means for receiving a request for target information,
wherein the searching means is arranged to provide the target information when the receiving means receives the request for target information.

24. An apparatus for processing location information, comprising:
means for receiving target information comprising at least one of a node identifier identifying a node relating to a target, a link identifier identifying a link relating to the target, and a relative location of the target based on at least one of the node and the link;
means for storing node information relating to a place on a map and link information connecting places on the map; and
means for searching the storing means to obtain at least one of the node information or the link information based on at least one of the node identifier and the link identifier included in the target information and for obtaining the target using the relative location of the target and at least one of the node information and the link information.

25. The apparatus of claim 24, wherein the target information comprises:
the link identifier; and
the relative location of the target from a start or an end of the link.

26. The apparatus of claim 24, wherein the target information comprises:
the link identifier;
a first angle between a first line connecting a start of the link and the target and a second line connecting the start of the link and an end of the link; and
a second angle between a third line connecting the end of the link and the target and the second line connecting the start of the link and the end of the link.

27. The apparatus of claim 24, wherein the target information comprises:
the link identifier;
the node identifier; and
the relative location of the target located along a straight line connecting a start or an end of the link and the node.

28. The apparatus of claim 27, wherein the relative location of the target is indicated as a percentage of the length of the straight line from the start of the link or from the end of the link, or
a distance from the node to the target along the straight line.

29. The apparatus of claim 24, wherein the location information regarding the target is provided using an identifier of a first node, an identifier of a second node, and the relative location of the target along a straight line connecting the first node and the second node.

30. The apparatus of claim 29, wherein the relative location of the target is indicated as a percentage of the length of the straight line from the first node, or a distance from the second node to the target along the straight line.
